Europäisches Patentamt

European Patent Office

Office européen des brevets

(11) Publication number: **0 319 987 B1**

# EUROPEAN PATENT SPECIFICATION

(45) Date of publication of patent specification: **22.04.92**    (51) Int. Cl.5: **A23L 1/317**, A23L 1/314

(21) Application number: **88120566.0**

(22) Date of filing: **08.12.88**

(54) Process for producing processed minced meat foods.

(30) Priority: **09.12.87 JP 311417/87**

(43) Date of publication of application:
**14.06.89 Bulletin 89/24**

(45) Publication of the grant of the patent:
**22.04.92 Bulletin 92/17**

(84) Designated Contracting States:
**DE FR GB**

(56) References cited:
**US-A- 4 676 976**

**DERWENT, no. 88-273869[39], Derwent Publications Ltd, London, GB; & JP-A-63 198 951 (AJINOMOTO K.K.) 17-08-1988**

**PATENT ABSTRACTS OF JAPAN, vol. 10, no. 377 (C-392)[2434], 16th December 1986; & JP-A-61 170 362 (OSAMU UCHI) 01-08-1986**

(73) Proprietor: **AJINOMOTO CO., INC.**
**5-8, Kyobashi 1-chome, Chuo-ku**
**Tokyo 104(JP)**

(72) Inventor: **Sakamoto, Jiro Central Res. Lab.**
**Ajinomoto Co. Inc**
**No. 1-1, Suzuki-cho Kawasaki-ku**
**Kawasaki-shi Kanagawa-ken(JP)**
Inventor: **Iga, Itsuo Central Res. Lab.**
**Ajinomoto Co. Inc.**
**No. 1-1, Suzuki-cho Kawasaki-ku**
**Kawasaki-shi Kanagawa-ken(JP)**

(74) Representative: **Strehl, Schübel-Hopf, Groening**
**Maximilianstrasse 54 Postfach 22 14 55**
**W-8000 München 22(DE)**

EP 0 319 987 B1

## Description

The present invention relates to a novel process for producing processed minced meat foods. More particularly, it relates to a process for producing processed minced meat products, such as hamburgers, etc., whose property of resulting in a heterogenous feeling during eating of the products is not deteriorated, and are also free from deformation in shape and reduction in volume due to heat shrinkage.

One major characteristic of the feeling in the mouth when eating processed meat products consisting mainly of minced meat (such products can be represented by hamburgers) lies in heterogenous feeling or so-called "feeling of meat grains". In general, such minced meat products are typical of high caloric food since meat is used as a main raw material. During cooking or roasting they tend to shrink because of so-called "roast shrinkage", which results in deformation, reduction in volume, etc.

One method for reducing the caloric value of processed minced meat foods is to replace part of the minced meat with a low caloric foodstuff, such as konjak jelly.

Konjak jelly is a traditional food prepared from swollen konjak mannan, a component contained in Devil's-tongue, by the addition of an alkaline substance, such as lime milk, etc followed by heat gelation. When this product is eaten it gives a feeling characteristic of its high elasticity.

In known methods for producing processed minced meat foods, a hydrated product of konjak mannan is mixed with such foodstuffs as minced meat, etc. , and subjected to gelation before or after the mixing. However, when konjak mannan is applied to processed minced meat foods in this manner, the feeling of the products during eating is seriously impaired by the viscoelasticity characteristic of konjak, and the desirable heterogenous texture based on the feeling of meat grains could hardly be attained.

Accordingly, In the case where konfak mannan gel is used in order to reduce caloric value or to alleviate "roast shrinkage", there could hardly be obtained processed minced meat foods capable of giving the desired heterogenous feeling.

EP-A-0 310 703 a document under Art. 54(3), discloses processed meat products comprising pieces of meat and pieces of a konjak mannan gel which have been subjected to a thermal treatment.

JP-A-61/170 362 refers to a method for obtaining food having improved shelf stability by mixing mannan of konjak swelled with water with a gelatinizing agent and optionally meat, freezing and gelatinizing the mixture.

According to US-A-4 676 976 a konjak mannan-containing reversible gel which is obtained without alkali treatment can be used as a food component. This konjak mannan containing reversible gel differs from the commonly used irreversible gels by the fact, that it is solidified into a konjak-like gel at room temperature to 40°C, is however transformed into a liquid-paste like or semi solid state at 50°C or higher.

It is known that when konjak jelly is frozen and thawed, its water-holding capability deteriorates significantly, and it changes into a spongy substance. Because of this, it has been attempted to use cyclodextrin and carrageenan in combination with konjak so as to impart freezing-resistant property to konjak (see Japanese Patent Application (Laid Open) No. 216,662/83). The present inventors have investigated this matter. As a result, it has been found that (1) a frozen gel of konjak mannan has an increased hardness and a smaller elasticity in comparison with a heated gel, (2) syneresis at the time of freezing and thawing can be suppressed by adding a gel-forming material other than konjak mannan (for example, starch) to swollen konjak mannan, and (3) an aqueous sol of konjak mannan has a sufficient bonding capability after the addition of an alkaline substance until the completion of its gelation.

The present invention has been completed on the basis of the above findings and is concerned with a process for producing processed minced meat products, which comprises adding 0.01 to 0.04 parts bit weight of an alkaline substance to an aqueous sol containing 1 part by weight of a mannan, preferably konjak mannan, 0.2 to 10 parts by weight of other gel-forming materials and 15 to 50 parts by weight of water; mixing the resulting gel with minced meat and optionally other foodstuffs and/or food additives; and then freezing the resulting mixture at a temperature not higher than -10°C.

In the present invention, a mannan issued in combination with other edible materials having the ability of forming gel as raw, materials for the aqueous sol. The mannan usable in the invention includes both raw powders particularly konjak powders, and refined glucomannan, particularly of konjak. Any konjak powders capable of forming gel by treatment with an alkaline substance can be used, irrespective of the degree of purification. As examples of other gel-forming materials usable in combination with konjak mannan, mention may be made of raw starches, such as potato starch, corn starch, wheat starch, rice starch, waxy starch, etc.; processed starches, such as alpha-starches, aged starches, etc.; grain powders, such as wheat powders, rice powders. starch powders, etc.; gums, such as xanthan gum, locust bean gum, tamarind gum, etc. polysaccharides, such as carrageenan, alginic acid, pectin, agar-agar, etc. ; and proteins, such as gelatin, soybean protein, egg white, etc.

In the present invention, at least one gel-forming material is selected from those described above. Gel-forming materials other than konjak mannan are used in an amount of 0.2 to 10 parts by weight, per 1 part by weight of konjak mannan. When gel-forming materials other than konjak mannan are used in an amount less than the lower limit of the above range, undesirably high syneresis will occur during freezing and thawing, and a cooked Product having poor quality will result. when they are used in an amount greater than the above upper limit, the gelation of konjak mannan upon freezing will become insufficient, and there will result a cooked product resulting in a poor feeling when the product is eaten.

Then, konjak mannan and other gel-forming materials are swollen by water. It is however possible to swell konjak mannan alone. In this case, other gel-forming materials not subjected to swelling can be added at a step after the swelling of konjak mannan. The swelling can be effected by water or an aqueous solution containing seasoning agents or the like. In either case, swelling water is used in an amount 15 to 50 times that of konjak mannan (based on weight). If the amount of water used for the swelling is less than 15 times that of konjak mannan, the konjak mannan will be swollen, or will absorb water insufficiently so as only to form an inhomogeneous gel, and therefore will result in a product giving a poor feeling during eating. On the other hand, if it is more than 50 times, the strength of gel formed will be insufficient, and a product having a poor hardness will result.

Although the time required for the swelling depends on the concentration of konjak mannan in the aqueous sol, it can be 1 to 2 hours at 20°C if the amount of swelling water used is in the above range. The swelling can be effected by allowing the mixture to stand or by stirring it with a kneader or the like. There are no particular restrictions on the swelling temperature. After the completion of the swelling, the swollen product is subjected to alkaline treatment. Examples of usable alkaline substances include slaked lime (calcium hydroxide), sodium carbonate, potassium carbonate, sodium hydrogencarbonate, monosodium phosphate, disodium phosphate, and the like. A solution or suspension containing one or more of these alkaline substances is added to, and allowed to contact with, the swollen product. Alkaline substances can be used in an amount 0.01 to 0.04 times that of konjak mannan (based on weight). If alkaline substances are used in an amount less than the above lower limit, the gelation of konjak mannan will not proceed sufficiently, whereas if the amount exceeds the above range, an undesirably strong alkalinity will result. The alkaline agent and the gel can be brought into uniform contact by kneading or the like.

After the alkali treatment, the swollen product is mixed with minced meat and, if desired, other raw materials, such as vegetables, etc., by using kneader, silent cutter, or the like. There is no particular restriction on the means to be used for the mixing. The swollen product can be shaped into a desired shape by using. e.g., meat chopper or the like before it is subjected to the mixing. It can be preferable to carry out the mixing operation at a lowest possible temperature because of possible deterioration of meat, vegetables, etc. or of possible contamination by microorganisms. Seasoning agents and other additives can be added to minced meat, vegetables, etc. prior to or after the mixing or at the time of mixing with the swollen product.

The thus prepared mixture, if desired, is shaped into any desired shape and then subjected to freezing. The freezing is carried out at a temperature preferably not higher than -10°C, more preferably not higher than -40°C. taking into consideration possible destruction of the meat tissue resulting from the growth of crystals of ice. The frozen product can be cooked in a conventional manner and served for eating.

The process for producing minced meat foods of the invention can be applied to any food that utilizes minced meat as a raw material, for example, hamburgers patties, meat balls, coarse cut sausages, shishkebabs, shao-mais. dumplings, and the like. In particular, the present invention can be highly useful for the production of such foods as hamburgers, patties, coarse cut sausages, etc. which may suffer from roast shrinkage and require an appropriate hardness and heterogenous feeling based on minced meat.

According to the invention there can be obtained low caloric minced meat products which are free from the elasticity characteristic of konjak jelly, possess both appropriate hardness and heterogeneity and give no foreign feeling compared with ordinary low caloric meat products. In addition, the products, because of heat stability of frozen konjak mannan gel. show no heat shrinkage, which is often observed when ordinary meat products are subjected to heating.

The present invention will further be illustrated by way of examples.

Example 1: Hamburger

Into 1.600 ml of water were suspended 80 g of konjak mannan and 120 g of starch ("ginrei" manufactured by Ajinomoto Co., Inc. ), and the suspension was allowed to stand at room temperature for 1 hour so as to swell the konjak mannan. To the swollen products was added 200 ml of aqueous 0.8% calcium hydroxide solution, and the mixture was well kneaded. Then 2 kg of minced lean beef, 800 g of minced onion, 250 g of whole eggs, 100 g of bread crumbs, 32 g of sodium chloride and 0.8 g of white pepper were added to the mixture. The resulting mixture was well admixed. shaped into an oval shape and then frozen in a freezer at -40°C. The frozen product was cooked on a hot plate of 160 to 200°C.

The thus cooked hamburgers had a caloric value smaller by ca. 30% than ordinary hamburgers and showed no shrinkage at the time when heated. They also had an appropriate hardness and a favorable heterogeneity.

Example 2: Coarse Cut Sausage

There was prepared a mixture of 20 g of konjak mannan, 15 g of starch ("Ginrei" manufactured by Ajinomoto Co., Inc.) and 5 g of powders of egg white, and the mixture was suspended into 400 ml of water. The suspension was allowed to stand at 5°C for 2 hours so as to effect swelling. To the swollen product was added 40 ml of aqueous 0.9% sodium hydroxide solution, and the mixture was well kneaded. Thereafter. 400 g of minced pork, 30 g of gelatin. 8 g of sodium chloride, 2 g of sodium glutamate and 0.3 g of white pepper were added to the kneaded product and then mixed. The resulting mixture was stuffed in a Φ15 mm casing tube and frozen in a freezer at -15°C. The frozen product was heated in boiling water for 20 minutes resulting in a coarse cut sausage. The thus obtained product had a caloric value of ca. 1/2 of that of ordinary products and showed an appropriate hardness and a sufficient binding strength.

## Claims

1. A process for producing processed minced meat foods. which comprises adding 0.01 to 0.04 parts by weight of an alkaline substance to an aqueous sol containing 1 part by weight of a mannan, 0.2 to 10 parts by weight of other gel-forming materials and 15 to 50 parts by weight of water; mixing the resulting gel with minced meat and optionally other foodstuffs and/or food additives; and then freezing the resulting mixture at a temperature not higher than -10°C.

2. A process for producing processed minced meat foods according to claim 1, wherein the mannan is konjak mannan.

3. A process for producing processed minced meat foods according to claim 1 or 2 wherein said other gel-forming material is selected from the group consisting of starch, grain powders, animal proteins and plant proteins.

4. A process for producing processed minced meat foods according to any of the claims 1 to 3. wherein said processed minced meat food is a hamburger, a patty or a coarse cut sausage.

## Revendications

1. Procédé de production de produits alimentaires élaborés à partir de viande hachée, lequel comprend l'addition de 0,01 à 0,04 partie en poids d'une substance alcaline à un sol aqueux contenant 1 partie en poids d'un mannane, 0,2 à 10 parties en poids d'autres substances gélifiantes et 15 à 50 parties en poids d'eau ; le mélange du gel obtenu avec de la viande hachée et facultativement d'autres produits alimentaires et/ou des additifs alimentaires ; puis la congélation du mélange résultant à une température inférieure ou égale à -10°C.

2. Procédé de production de produits alimentaires élaborés à partir de viande hachée selon la revendication 1, dans lequel le mannane est du mannane de Konjak.

3. Procédé de production de produits alimentaires élaborés à partir de viande hachée selon la revendication 1 ou 2, dans lequel ladite autre substance gélifiante est sélectionnée dans le groupe constitué par l'amidon, des poudres de céréales, des protéines animales et des protéines végétales.

4. Procédé de production de produits alimentaires élaborés à partir de viande hachée selon l'une quelconque des revendications 1 à 3, dans lequel ledit produit alimentaire élaboré à partir de viande hachée est un hamburger, un pâté ou une saucisse grossièrement hachée.

## Patentansprüche

1. Verfahren zur Herstellung von Fertignahrungsmitteln aus Hackfleisch, gemäß dem 0,01 bis 0,04 Gew.-Teil einer alkalischen Substanz zu einem wäßrigen Sol zugefügt wird, das 1 Gew.-Teil Mannan, 0,2 bis 10 Gew.-Teile anderer gelbildender Materialien und 15 bis 50 Gew.-Teile Wasser enthält, das resultierende Gel mit Hackfleisch und gegebenenfalls anderen Nahrungsmitteln und/oder Nahrungsmittelzusätzen vermischt wird und danach das erhaltene Gemisch bei einer Temperatur nicht höher als -10 °C gefroren wird.

2. Verfahren zur Herstellung von Fertignahrungsmitteln aus Hackfleisch gemäß Anspruch 1, bei dem das Mannan Konjakmannan ist.

3. Verfahren zur Herstellung von Fertignahrungsmitteln aus Hackfleisch gemäß Anspruch 1 oder 2, bei dem das andere gelbildende Material aus der aus Stärke, gemahlenem Getreide, tierischen Proteinen und Pflanzenproteinen bestehenden Gruppe ausgewählt ist.

4. Verfahren zur Herstellung von Fertignahrungsmitteln aus Hackfleisch gemäß einem der Ansprüche 1 bis 3, bei dem das Fertignahrungsmittel aus Hackfleisch ein Hamburger, eine Pastete oder eine Wurst mit grobgeschnittener Füllung ist.